# EUROPÄISCHE PATENTANMELDUNG

(11) **EP 2 796 199 A1**
(43) Veröffentlichungstag der Anmeldung: **29.10.2014**
(21) Anmeldenummer: 14158875.6
(22) Anmeldetag: 11.03.2014
(51) Int. Cl.: B01L 3/00, F04B 19/00, F04B 43/04

(54) **Mikrohydraulisches System, insbesondere zum Einsatz in planaren Mikrofluidiklaboren**

(30) Priorität: 22.04.2013 DE 102013207193
(71) Anmelder: ROBERT BOSCH GMBH, 70442 Stuttgart (DE)
(72) Erfinder: Berning, Sebastian, 60325 Frankfurt (DE)

(57) **Zusammenfassung**

Die vorliegende Erfindung schafft ein mikrohydraulisches System (100), insbesondere zum Einsatz in planaren Mikrofluidiklaboren, aufweisend ein erstes hydraulisch wirkendes Element (10) als ein Geberelement mit einer Gebermembran (20), sowie ein zweites hydraulisch wirkendes Element (30) als ein Aktuatorelement mit einer Aktuatormembran (40), wobei die Gebermembran (20) mit der Aktuatormembran (40) derart fluidisch gekoppelt ist, dass eine Auslenkung der Gebermembran (20) eine Auslenkung der Aktuatormembran (40) bewirkt sowie eine Betätigung der Gebermembran (20) sowohl mittels einer Druckkraft als auch mittels einer Zugkraft vorgesehen ist, und somit die Gebermembran (20) in Abhängigkeit von ihrer Auslenkung eine Druck- oder Zugkraft auf die Aktuatormembran (40) ausübt.

## Beschreibung

### Stand der Technik

Die chemische und biologische Analyse von Stoffproben erfordert häufig die Handhabung kleinster Mengen von Flüssigkeiten. Beispiele hierfür finden sich u.a. bei Proben in der Medizin (Blut, Speichel, Urin, etc.) und in der Umweltanalytik. Die Handhabung dieser Flüssigkeiten erfolgt heute vielfach noch unter großem Zeitaufwand manuell, indem nacheinander die Flüssigkeiten nach einem festgelegten Protokoll prozessiert werden.

Lab-on-a-Chip-Systeme (auch als Westentaschenlabor oder Chiplabor bezeichnet, kurz LoC) bringen die gesamte Funktionalität eines makroskopischen Labors auf einem nur plastikkartengroßen Kunststoffsubstrat unter. Lab-on-a-Chip-Systeme bestehen typischerweise aus zwei Hauptkomponenten. Einer Kartusche zur einmaligen Verwendung (das eigentliche LoC), welche im Kontakt mit den prozessierten Flüssigkeiten steht und die Grundoperationen, wie beispielsweise abmessen, mischen, filtern, etc. implementiert. Dazu sind in der Regel passive Komponenten wie Kanäle und Lagerungskammern für die benötigten Reagenzien vorhanden, sowie aktive Komponenten wie Ventile und Pumpen. Die zweite Hauptkomponente ist ein Analysegerät, welches die zuvor beschriebene Kartusche aufnimmt, die aktiven Komponenten darauf nach einem festgelegten Programm steuert, und anschließend das Ergebnis der Analyse ausliest und für den Anwender aufbereitet. Ein solches System ermöglichet es, biochemische Prozessabläufe vollautomatisiert umzusetzen.

Bei häufig verwendeten planar aufgebauten LoC-Systemen werden Pumpkammern oder Ventile auf der Kartusche durch plastische Verformung einer flexiblen Membran realisiert, welche mit den eingeschlossenen Flüssigkeiten in Kontakt stehen. Die Kraft zum Verformen dieser Membran wird dabei in der Regel pneumatisch bereitgestellt, das heißt durch die Einleitung eines Gases mit einem differenziellen Über- oder Unterdruck gegenüber einer Flüssigkeit auf der anderen Seite der Membran. Die pneumatischen Steuerleitungen werden vom Analysegerät an definierten Stellen an die Kartusche kontaktiert und in Kanälen in der Kontrollschicht der Kartusche zu den Ventilen und Pumpkammern geleitet.

DE 19949912 A1 zeigt eine Vorrichtung für eine Kraftübersetzung, bei der ein kleiner Hub mit großer Kraft in einen großen Hub übersetzt werden soll. Hierzu wird in der Steuerschicht über der Membran eine Flüssigkeit eingeschlossen.

### Vorteile der Erfindung

Das in dem Anspruch 1 definierte mikrohydraulische System, welches insbesondere zum Einsatz in planaren Mikrofluidiklaboren vorgesehen ist, weist den Vorteil auf, dass im Gegensatz zu herkömmlichen Systemen, bei denen der zeitliche Verlauf des Drucks, welcher an der Membran eines Ventils oder einer Pumpe anliegt, bei einer pneumatischen Betätigung nur begrenzt beeinflusst werden kann, da in der Regel nur zwischen konstanten Druckniveaus geschaltet werden kann, mit der vorliegenden Erfindung nunmehr die Betätigung des Geberelements im Prinzip stufenlos erfolgen kann bzw. eine Übertragung dieser Betätigung von dem Aktuatorelement auf mit diesem verbundene Komponenten wiederum stufenlos erfolgt. Des Weiteren ist mit dem vorliegenden mikrohydraulischen System eine quasi verlustfreie Übertragung von Drücken innerhalb des LoC-Systems von einem Erzeugungsort im Geberelement zu dem Aktuatorelement, insbesondere eine Pumpe oder ein Ventil, möglich. Zusätzlich bietet das vorliegende mikrohydraulische System gegenüber herkömmlichen Systemen den Vorteil, dass nunmehr eine Kraftübertragung von dem Geberelement zu dem Aktuatorelement sowohl für die Übertragung von Zugkräften als auch von Druckkräften möglich ist, wodurch das Aktuatorelement ausgangsseitig je nach dessen Betätigung entweder ein Fluid ansaugen oder abgeben kann. Dadurch lässt sich für das Aktuatorelement prinzipiell in Abhängigkeit von dessen vorgesehenem Verwendungszweck als eine Pumpe oder als ein Ventil gestalten, wodurch die Einsatzmöglichkeiten des mikrohydraulischen Systems wesentlich erweitert werden.

Die vorstehend beschriebenen konstanten Druckniveaus führen insbesondere beim Entleeren bzw. bei der Befüllung von Pumpkammern zu Problemen. Wird die Membran zu schnell gehoben, so kann die Flüssigkeit in der Pumpkammer aufgrund des Strömungswiderstands im Zufluss das Volumen nicht sofort ausfüllen, und es entsteht ein Unterdruck in der Pumpkammer. Insbesondere bei Temperaturen nahe dem Siedepunkt der Flüssigkeit kommt es dann zu einer vermehrten Verdunstung. Der entstehende Dampf bleibt dann als Blase oder Schaum in der Pumpkammer gefangen und behindert dort chemische bzw. biochemische Reaktionen. Das ist zum Beispiel bei der Polymerase-Kettenreaktion (PCR), einem wichtigen Prozess in der Molekularbiologie, der Fall. Dort befindet sich die Temperatur in mindestens einem Prozessschritt (Denaturierung) nahe dem Siedepunkt der Flüssigkeit (ca. 95°C). Eine mögliche Abhilfe erfolgt hierfür derzeit nur durch eine (fest eingestellte) externe Drosselung des Luftstroms, wodurch aber die Flexibilität bei Anpassung der Betätigung des Geberelements verloren geht, da jeder Pneumatikanschluss des Steuergerätes mit einer festen Charakteristik des Druckverlaufs verknüpft ist. Im Gegensatz dazu kann mit dem vorliegenden mikrohydraulischen System eine flexible Dämpfung des zeitlichen Druckverlaufs an der Membran des Aktuatorelements direkt auf dem LoC realisiert werden.

Das vorliegende mikrohydraulische System sorgt in vorteilhafter Weise für eine Stabilisierung und Homogenisierung von temperaturkritischen Prozessen in Pumpkammern. Da bei herkömmlichen LoC-System die Prozessluft in der Pneumatik nicht temperiert ist, kommt es bei temperaturkritischen Prozessen, das heißt bei Prozessen, welche bei definierten Temperaturen ablaufen müssen, insbesondere in Pumpkammern zu kurzzeitigen Temperaturschwankungen in der Nähe der Membran, wenn Prozessluft in der Steuerschicht ein- oder ausgelassen wird. Aufgrund des großen Oberflächen-Volumen-Verhältnisses sind dabei inhomogene Temperaturverteilungen zu erwarten, die zum Beispiel bei der PCR zur Bildung von unerwünschten Nebenprodukten führen können. Das vorliegende mikrohydraulische System entkoppelt in vorteilhafter Weise die temperaturempfindliche Prozessseite (hier das Aktuatorelement als Verbindung zu nachfolgenden Prozesskomponenten) von der Betätigungsseite (hier das Geberelement), so dass die vorstehend erwähnten Nachteile bei der Betätigung des Geberelements mittels Druckluft vermieden werden.

Des Weiteren führt das vorliegende mikrohydraulische System zu einer Versiegelung der fluidischen Prozesse gegenüber der Umwelt bzw. dem Analysegerät. Bei einem herkömmlichen LoC-System ist das Material der Membran eines aktiven Elements, insbesondere bei geringer Dicke, häufig durchlässig gegenüber Prozessflüssigkeiten, Dämpfen und der Druckluft im Pneumatiksystem. Wird zusätzlich noch ein Vakuum oberhalb der Membran angelegt, so gehen dem fluidischen System Stoffe verloren. Das führt zum einen zu einer Kontamination des pneumatischen Systems und zum anderen zu einer Modifikation des Prozesses, da sich die Zusammensetzung der Flüssigkeiten im System über die Zeit ändert. Im Gegensatz dazu ist bei dem vorliegenden mikrohydraulischen System das Fluid zwischen dem Geberelement und dem Aktuatorelement von den jeweiligen angrenzenden funktionellen Schnittstellen getrennt, insbesondere wenn das Fluid chemisch so gewählt wird, dass sich die prozessierten Stoffe im fluidischen System nicht darin lösen, und es somit eine effektive Barriere zur Umwelt bzw. dem Analysegerät bildet. Zusätzlich dazu ist bei dem vorliegenden mikrohydraulischen System das Fluid zwischen dem Geberelement und dem Aktuatorelement von der Umwelt bzw. dem Analysegerät getrennt und in sich abgeschlossen, so dass eine hohe Prozesssicherheit bei der Verwendung des Fluids gewährleistet ist. Ein "Fluid" bezeichnet vorliegend besonders bevorzugt eine Flüssigkeit, welche zur Kopplung des Geberelements mit dem Aktuatorelement verwendet wird, und genauer eine Hydraulikflüssigkeit.

Während bei herkömmlichen LoC-Systemen eine direkte mechanische Steuerung der jeweiligen Pumpen und/oder Ventile durch das Analysegerät, beispielsweise mittels eines Stößels, die Flexibilität bei der Gestaltung der Kartusche wesentlich einschränkt, da die Lage der aktiven Komponenten auf der Kartusche nunmehr nicht variiert werden kann, sondern im Wesentlichen über die Anordnung der Antriebe im Analysegerät festgelegt ist, ermöglicht das vorliegende mikrohydraulische System den flexiblen Einsatz von, beispielsweise direkten elektrischen Antrieben, wodurch das Analysegerät in vorteilhafter Weise technisch vereinfacht werden kann und der Druckverlauf jeder aktiven Komponente auf der Kartusche individuell programmierbar wird. So kann beispielsweise für alle Kartuschen eine vorbestimmte Position für die Anordnung eines (elektrischen) Antriebs vorgesehen sein, wobei das Geberelement dann in der Nähe des Antriebs angeordnet werden sollte. Allerdings kann im Gegensatz zu herkömmlichen Systemen bei dem vorliegenden mikrohydraulischen System die Position des Aktuatorelements nunmehr sehr frei innerhalb des LoC gewählt werden, da eine Wirkverbindung zwischen dem Geberelement und dem Aktuatorelement mit Hilfe von deren fluidischen Kopplung vorgesehen ist und damit eine bauliche Trennung zwischen dem Geberelement und dem Aktuatorelement erfolgt, was wiederum eine flexible Anordnung des Aktuatorelements in dem LoC ermöglicht. Als Fluid können in dem vorliegenden mikrohydraulischen System beispielsweise Wasser, Silikonöle, Perfluorcarbone verwendet werden, welche als eine hydraulische Flüssigkeit auf das Geberelement bzw. das Aktuatorelement wirken. Bevorzugte Betriebsdrücke für das Geberelement bzw. das Aktuatorelement sind in einem Bereich von 100 mbar bis 10 bar.

Das vorliegende mikrohydraulische System ist vorzugsweise in ein (planares) Mikrofluidiklabor integriert, welches bevorzugt einen Schichtaufbau im Rahmen eines Schichtsystems aufweist, insbesondere als ein Polymerschichtsystem. Das Geberelement bzw. das Aktuatorelement können in einem festen Polymersubstrat aus zum Beispiel PC, PEEK (Polyetheretherketon), COP, COC ausgebildet sein. Die Dicke der jeweiligen Polymersubstrate kann zwischen 1 mm bis 5 mm betragen. Das Geberelement bzw. das Aktuatorelement können des Weiteren eine flexible Folie für die Geber- bzw. Aktuatormembran aufweisen, welche zum Beispiel aus einem Elastomer, einem thermoplastischen Elastomer, einem Silikon, einem Silikonkautschuk gebildet ist. Die Dicke einer solchen Folie kann zwischen 50 µm bis 2 mm betragen. Die Abmessung eines vorliegenden mikrohydraulischen Systems kann in der Draufsicht für die Breite bzw. die Länge jeweils ca. 100 mm bis 150 mm betragen.

Aus den Unteransprüchen ergeben sich vorteilhafte Ausgestaltungen der Erfindung.

Gemäß einer Ausgestaltung des erfindungsgemäßen mikrohydraulischen Systems weist das Geberelement eine Geberkammer auf, und das Aktuatorelement eine Aktuatorkammer auf, welche von der Geberkammer verschieden ist, und die Geberkammer ist mit der Aktuatorkammer mittels eines fluidischen Strömungskanals gekoppelt. Das vorliegende mikrohydraulische System ist charakterisiert durch zwei Kammern, wobei eine als die Geberkammer und die andere als die Aktuatorkammer ausgebildet ist. Jede der Kammern ist durch eine flexible Membran in jeweils zwei Halbkammern aufgeteilt. Zwischen je einer der Halbkammern der Geber- und der Aktuatorkammer ist ein fluidischer Strömungskanal ausgebildet. Bevorzugt sind dabei der fluidische Strömungskanal sowie die Geber- und Aktuatorkammer blasenfrei mit einem Fluid, vorzugsweise in der Art einer Flüssigkeit, zum Beispiel der Hydraulikflüssigkeit, gefüllt. Der Zweck des vorliegenden mikrohydraulischen Systems ist es, einen Druck, welcher in der Geberkammer auf die Gebermembran einwirkt, über den fluidischen Strömungskanal auf die Aktuatormembran zu übertragen. Die Aktuatormembran wiederum hat dabei die Aufgabe, den Druck des Fluids auf die zweite Halbkammer des Aktuatorelements zu übertragen, welche ausgangsseitig von dem Aktuatorelement fluidisch mit Pumpkammern und Ventilen auf dem planaren Mikrofluidiklabor gekoppelt ist, und somit deren Betätigung zu realisieren.

Gemäß einer weiteren Ausgestaltung des erfindungsgemäßen mikrohydraulischen Systems sind die Gebermembran und die Aktuatormembran im Wesentlichen in einer Ebene angeordnet, wobei eine mit dem Fluid gefüllte Halbkammer der Geberkammer in Bezug auf die Gebermembran auf einer gegenüber liegenden Seite von einer mit dem Fluid gefüllten Halbkammer der Aktuatorkammer angeordnet ist. Je nach der Dicke der verwendeten Schichten des Schichtsystems können die Geber- und die Aktuatorkammer in einer einzigen gemeinsamen Schicht oder in zwei voneinander getrennten Schicht angeordnet sein. Die Ebene kann sich dabei bevorzugt normal zu der Dickenrichtung des mikrohydraulischen Systems oder normal zu der Querrichtung des mikrohydraulischen Systems erstrecken.

Gemäß einer weiteren Ausgestaltung des erfindungsgemäßen mikrohydraulischen Systems sind die Gebermembran und die Aktuatormembran im Wesentlichen in einer Ebene angeordnet, wobei eine mit dem Fluid gefüllte Halbkammer der Geberkammer und eine mit dem Fluid gefüllte Halbkammer der Aktuatorkammer in Bezug auf die Gebermembran auf derselben Seite angeordnet sind. Je nach der Dicke der verwendeten Schichten des Schichtsystems können die Geber- und die Aktuatorkammer wiederum in einer einzigen gemeinsamen Schicht oder in zwei voneinander getrennten Schicht angeordnet sein. Die Ebene kann sich dabei bevorzugt normal zu der Dickenrichtung des mikrohydraulischen Systems oder normal zu der Querrichtung des mikrohydraulischen Systems erstrecken. Die Anordnung der Geber- und der Aktuatorkammer in Bezug auf die Gebermembran richtet sich je nach dem Anwendungsfall des Mikrofluidiklabors und dem verfügbaren Platz für das Layout des mikrohydraulischen Systems innerhalb der Abmessung von dem Mikrofluidiklabor.

Gemäß einer weiteren Ausgestaltung des erfindungsgemäßen mikrohydraulischen Systems sind die Gebermembran und die Aktuatormembran jeweils in unterschiedlichen Ebenen angeordnet. Die Ebene für die Gebermembran bzw. für die Aktuatormembran kann sich wiederum bevorzugt normal zu der Dickenrichtung des mikrohydraulischen Systems oder normal zu der Querrichtung des mikrohydraulischen Systems erstrecken.

Gemäß einer weiteren Ausgestaltung des erfindungsgemäßen mikrohydraulischen Systems weist eines von dem Geberelement oder dem Aktuatorelement eine Geberkammer oder eine Aktuatorkammer auf, wobei die Gebermembran oder die Aktuatormembran jeweils direkt mittels eines fluidischen Strömungskanals mit der Aktuatorkammer oder mit der Geberkammer gekoppelt ist. Auf diese ist dann die Gebermembran mit der Aktuatorkammer mittels des fluidischen Strömungskanals gekoppelt, oder die Geberkammer ist mit der Aktuatormembran mittels des fluidischen Strömungskanals gekoppelt. Bei diesen Konfigurationen mündet der fluidische Strömungskanal direkt an der jeweiligen Membran desjenigen Elements (Geberelement oder Aktuatorelement), welches keine zugehörige Kammer aufweist.

Gemäß einer weiteren Ausgestaltung des erfindungsgemäßen mikrohydraulischen Systems ist die Gebermembran mit einem Betätigungselement gekoppelt. So kann das Betätigungselement beispielsweise mittels einer Klemmverbindung mit der Gebermembran gekoppelt sein. Zusätzlich dazu ist auch eine stoffschlüssige Verbindung des Betätigungselements mit der Gebermembran möglich, zum Beispiel mittels Schweißen oder Kleben. In einer gleichwertigen Alternative kann das Betätigungselement formschlüssig und/oder kraftschlüssig mit der Gebermembran gekoppelt sein. Das Betätigungselement wirkt dabei auf die Gebermembran ein, wodurch das Geberelement in Abhängigkeit von der Wirkrichtung des Betätigungselements einen Druck oder einen Unterdruck bzw. Sog auf das Fluid in der Geberkammer ausübt. Das Betätigungselement kann in einer Ausführungsform ein pneumatisch wirkendes Luftvolumen sein, während in einer weiteren Ausführungsform das Betätigungselement ein mechanisches Element ist, welches mit der Gebermembran gekoppelt ist.

Gemäß einer weiteren Ausgestaltung des erfindungsgemäßen mikrohydraulischen Systems ist das Betätigungselement derart mit der Gebermembran gekoppelt, dass das Betätigungselement in Abhängigkeit von dessen Wirkrichtung eine Druck- oder Zugkraft auf die Gebermembran ausübt. Hierbei ist die Kopplung zwischen der Gebermembran und dem Betätigungselement derart ausgebildet, dass unabhängig von der tatsächlichen Wirkrichtung des Betätigungselements von dem Betätigungselement immer eine Kraft in die Gebermembran eingeleitet wird, wodurch wiederum eine der Kraft entsprechende Betätigung des Geberelements erfolgt. Diese Kopplung ermöglicht in vorteilhafter Weise nicht nur eine Betätigung des Geberelements in einer einzigen Wirkrichtung des Betätigungselements, sondern in zumindest zwei Wirkrichtungen, wodurch die Einsatzmöglichkeiten des Geberelements bzw. des gesamten vorliegenden mikrohydraulischen Systems gesteigert werden.

Gemäß einer weiteren Ausgestaltung des erfindungsgemäßen mikrohydraulischen Systems ist das Betätigungselement magnetisch mit der Gebermembran gekoppelt. Hierfür muss ein magnetisches Metall mit der Membran verbunden werden, welches im Betrieb mit einem metallischen Abschnitt des Betätigungselements für die Betätigung der Gebermembran zusammenwirkt.

Gemäß einer weiteren Ausgestaltung des erfindungsgemäßen mikrohydraulischen Systems weist das Betätigungselement einen Hebelabschnitt auf, welcher für die Betätigung des Geberelements mit einem Betätigungsmittel zusammenwirkt. Ein Beispiel für ein Betätigungsmittel stellt ein mechanischer Antrieb dar, welcher insbesondere durch elektrische Antriebe, wie beispielsweise Elektromotoren (in Verbindung mit einer Gewindestange oder einem Exzenter, um die Drehbewegung des Elektromotors in eine Linearbewegung zu übersetzen), piezoelektrische Aktuatoren, elektrostatische Aktuatoren oder elektromagnetische Stellantriebe (zum Beispiel Tauchspulenantrieben) realisiert werden kann. Da sich bei diesen elektrischen Antrieben die zeitliche Entwicklung der mechanischen Kraft auf die Gebermembran einfach steuern lässt, ist es dadurch auch möglich, jedes Geberelement durch eine elektronische Steuerung mit einem individuellem Druck bzw. Zug und einer individuellen Druck- bzw. Zugverlaufskurve zu betreiben. Durch Programmierung des Analysegeräts lässt sich das Stellverhalten frei an die Erfordernisse der Analyseapplikation anpassen, die auf einer bestimmten Kartusche implementiert ist. Des Weiteren kann das Betätigungselement zusätzlich mit einem Gelenk(element) gekoppelt sein, und somit um eine Schwenkachse des Gelenk(elements) in einem vorbestimmten Winkelbereich im Betrieb verschwenkt werden.

Gemäß einer weiteren Ausgestaltung des erfindungsgemäßen mikrohydraulischen Systems ist zumindest eine von der Gebermembran und der Aktuatormembran impermeabel für das Fluid. Vorzugsweise sind sowohl die Gebermembran als auch die Aktuatormembran impermeabel für das Fluid zwischen den beiden Membranen, insbesondere für eine Hydraulikflüssigkeit, und schließen das Fluid somit vollständig ein. Das Fluid kann dadurch nicht aus dem LoC entweichen.

Gemäß einer weiteren Ausgestaltung des erfindungsgemäßen mikrohydraulischen Systems sind der Gefrierpunkt und der Siedepunkt des Fluids so gewählt, dass das Fluid über den gesamten Temperaturbereich, welcher an der Aktuatormembran im Betrieb auftritt, jeweils flüssig ist. Somit wird in vorteilhafter Weise sichergestellt, dass das Fluid jeweils das Volumen des fluidischen Kanals zwischen der Gebermembran und der Aktuatormembran vollständig ausfüllt und ein Kanaleintrag in das hydraulische System durch Verdampfung und der damit verbundenen Volumenänderung des Fluids verhindert wird.

Gemäß einer weiteren Ausgestaltung des erfindungsgemäßen mikrohydraulischen Systems ist die Temperatur des Fluids im Betrieb im Wesentlichen identisch mit einer Temperatur eines zweiten Fluids, welches ausgangsseitig von dem Aktuatorelement mit der Aktuatormembran gekoppelt ist. Um temperaturempfindliche Prozesse in einer der Aktuatorkammer gegenüber liegenden fluidischen Struktur mit einem zweiten Fluid thermisch zu stabilisieren, kann das (erste) Fluid auf die gleiche Temperatur gebracht werden, wie das zweite Fluid. Auf dieses Weise entstehen trotz der im allgemeinen ungenügenden thermischen Isolation der Aktuatormembran keine thermischen Fluktuationen in dem zweiten Fluid, wenn das Fluid in die Aktuatorkammer ein- oder ausgebracht wird.

Gemäß einer weiteren Ausgestaltung des erfindungsgemäßen mikrohydraulischen Systems ist der Strömungswiderstand in dem fluidischen Strömungskanal mittels der Länge und/oder des Durchmessers des fluidischen Strömungskanals variierbar. Grundsätzlich kann durch eine geeignete Wahl der Viskosität des Fluids, sowie der Länge und des Durchmessers von dem fluidischen Kanal der Strömungswiderstand zwischen den Kammern des Geber- und Aktuatorelement variiert werden. Dadurch kann ein schneller Druckanstieg auf der der Geberkammer gegenüber liegenden Seite, wie er beispielsweise bei der Verwendung von Druckluft für die Betätigung des Geberelements entsteht, je nach Bedarf bei der Übertragung auf die Aktuatormembran gedämpft werden. Die dafür erforderlichen Dimensionen des fluidischen Kanals sind aufgrund der höheren Viskosität des Fluids gegenüber Gasen deutlich größer und somit prozesstechnisch einfacher und mit geringeren Toleranzen zu fertigen. Externe Komponenten zur Drosselung des Druckanstiegs in der Pneumatik sind somit nicht mehr nötig.

### Kurze Beschreibung der Zeichnung

Ausführungsbeispiele der Erfindung sind in den Figuren der Zeichnung dargestellt und in der nachfolgenden Beschreibung näher erläutert.

Es zeigen:
- Figuren 1A-1C: schematisch jeweils eine seitliche Ansicht eines mikrohydraulischen Systems gemäß einem ersten bis dritten Ausführungsbeispiel der vorliegenden Erfindung;
- Figur 2: eine seitliche Ansicht des mikrohydraulischen Systems gemäß dem ersten Ausführungsbeispiel von Figur 1A der vorliegenden Erfindung, bei dem die Gebermembran mit einem Druck beaufschlagt wird;
- Figur 3: eine seitliche Ansicht des mikrohydraulischen Systems gemäß dem ersten Ausführungsbeispiel von Figur 1A der vorliegenden Erfindung, bei dem die Gebermembran mit einem Unterdruck beaufschlagt wird;
- Figur 4: eine seitliche Ansicht des mikrohydraulischen Systems gemäß dem ersten Ausführungsbeispiel von Figur 1A der vorliegenden Erfindung, bei dem eine thermische Harmonisierung zwischen zwei voneinander getrennten Fluiden erfolgt;
- Figur 5: schematisch eine seitliche Ansicht eines mikrohydraulischen Systems gemäß einem vierten Ausführungsbeispiel der vorliegenden Erfindung, bei dem eine Gebermembran von einem Betätigungselement auf Druck beansprucht wird;
- Figur 6: schematisch eine seitliche Ansicht des mikrohydraulischen Systems gemäß Figur 5, bei dem die Gebermembran von dem Betätigungselement auf Zug beansprucht wird;
- Figur 7: schematisch eine seitliche Ansicht eines mikrohydraulischen Systems gemäß einem fünften Ausführungsbeispiel der vorliegenden Erfindung, bei dem eine Gebermembran mit einem Betätigungsmittel über ein Betätigungselement mit einem Hebelabschnitt gekoppelt ist, in einer Ausgangsstellung;
- Figur 8: schematisch eine seitliche Ansicht des mikrohydraulischen Systems gemäß Figur 7, bei dem die Gebermembran von dem Betätigungselement auf Druck beansprucht wird; und
- Figur 9: schematisch eine seitliche Ansicht des mikrohydraulischen Systems gemäß Figur 7, bei dem die Gebermembran von dem Betätigungselement auf Zug beansprucht wird.

In den Figuren bezeichnen gleiche Bezugszeichen gleiche oder funktionsgleiche Elemente, soweit nichts Gegenteiliges angegeben ist.

Da sich Ventile und Pumpkammern grundsätzlich nur durch einen zusätzlichen Steg in der Kammer des hydraulisch wirkenden Elements (und in der Regel auch im Volumen der zugehörigen Kammer) unterscheiden, werden im Folgenden zur Vereinfachung nur Pumpkammern betrachtet, sofern sich das entsprechende Ventil technisch analog konstruieren lässt. Die vorliegende Erfindung lässt sich deshalb allgemein für Ventile und Pumpkammern anwenden.

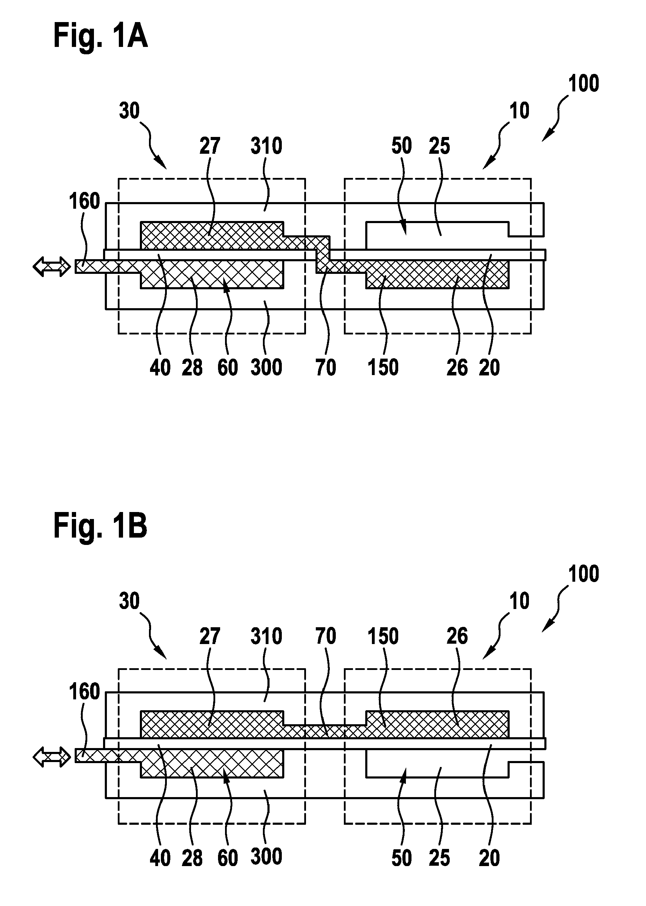

Figuren 1A-1C zeigen schematisch jeweils eine seitliche Ansicht eines mikrohydraulischen Systems 100 gemäß einem ersten bis dritten Ausführungsbeispiel der vorliegenden Erfindung. Die folgenden Ausführungen gelten allgemein für das erste bis zum dritten Ausführungsbeispiel. Abweichungen von der allgemein gültigen Bauform des mikrohydraulischen Systems 100 werden mit Bezugnahme auf das jeweilige Ausführungsbeispiel erläutert werden.

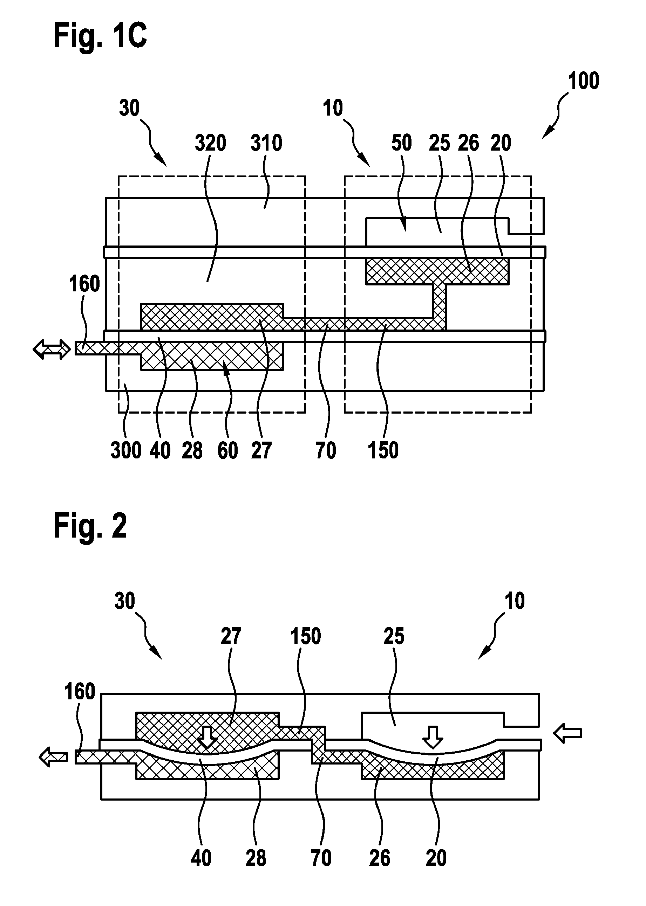

Das mikrohydraulische System 100 ist vorzugsweise in ein (planares) Mikrofluidiklabor (nicht dargestellt) integriert, welches bevorzugt einen Schichtaufbau im Rahmen eines Schichtsystems aufweist, insbesondere als ein Polymerschichtsystem. Das mikrohydraulische System 100 ist hier in einer oberen Polymerschicht 300 und einer unteren Polymerschicht 310 ausgebildet. In dem dritten Ausführungsbeispiel gemäß Figur 1C ist zusätzlich noch eine mittlere Polymerschicht 320 zwischenliegend zwischen der unteren Polymerschicht 310 und der oberen Polymerschicht 300 vorgesehen.

Das mikrohydraulische System 100 weist ein erstes hydraulisch wirkendes Element 10 als ein Geberelement mit einer Gebermembran 20, ein zweites hydraulisch wirkendes Element 30 als ein Aktuatorelement mit einer Aktuatormembran 40 auf, wobei das Geberelement mit dem Aktuatorelement über ein Fluid 150 fluidisch gekoppelt ist, und eine Betätigung des Geberelements eine Betätigung des Aktuatorelements realisiert. Sowohl die Gebermembran 20 als auch die Aktuatormembran 40 befinden sich dabei in einer neutralen Ausgangsstellung, das heißt sie sind weder elastisch noch plastisch verformt. In der zweiten Halbkammer 28 der Aktuatorkammer 60 ist ein zweites Fluid 160 vorhanden, welches die Betätigung des Aktuatorelements in Richtung zu einer Ausgangsseite des mikrohydraulischen Systems 100 überträgt, wodurch wiederum weitere hydraulisch wirkende Elemente (nicht dargestellt) betätigt werden können.

Das mikrohydraulische System 100 ist charakterisiert durch eine Geberkammer 50 und eine Aktuatorkammer 60. Jede der Kammern 50, 60 ist durch die zugehörige verformbare Membran 20, 40 jeweils in zwei Halbkammern (25 und 26 sowie 27 und 28) aufgeteilt. Zwischen je einer der Halbkammern der Geber- und der Aktuatorkammer 50, 60 ist mindestens ein fluidischer Strömungskanal 70 ausgebildet. Der fluidische Strömungskanal 70 sowie die Geber- und Aktuatorkammer 50, 60 sind blasenfrei mit dem Fluid 150 (besonders bevorzugt einer Hydraulikflüssigkeit) gefüllt. Die spezielle Anordnung der Halbkammern 25-28 in dem vorliegenden mikrohydraulischen System 100 kann in Abhängigkeit von dem jeweiligen Ausführungsbeispiel variieren, was jedoch nichts an deren grundsätzlichen Funktion ändert.

Sowohl bei dem ersten Ausführungsbeispiel als auch bei dem zweiten Ausführungsbeispiel sind die Gebermembran 20 und die Aktuatormembran 40 im Wesentlichen in einer Ebene angeordnet. In dem dritten Ausführungsbeispiel sind die Gebermembran 20 und die Aktuatormembran 40 in unterschiedlichen Ebenen der Polymerschichtsystems angeordnet. In dem ersten Ausführungsbeispiel ist die mit dem Fluid 150 gefüllte Halbkammer 26 der Geberkammer 50 in Bezug auf die Gebermembran 20 auf einer gegenüber liegenden Seite von der mit dem Fluid 150 gefüllten Halbkammer 27 der Aktuatorkammer 60 angeordnet. In dem zweiten Ausführungsbeispiel sind die mit dem Fluid 150 gefüllte Halbkammer 26 der Geberkammer 50 und die mit dem Fluid 150 gefüllte Halbkammer 27 der Aktuatorkammer 60 in Bezug auf die Gebermembran 20 auf derselben Seite angeordnet. In dem dritten Ausführungsbeispiel sind die Geberkammer 50 und die Aktuatorkammer 60 in unterschiedlichen Ebenen angeordnet. Zudem sind auch die Gebermembran 20 und die Aktuatormembran 40 in unterschiedlichen Ebenen angeordnet. Die Geberkammer 50 ist teilweise in der oberen Polymerschicht 300 und teilweise in der mittleren Polymerschicht 320 ausgebildet. Die Aktuatorkammer 60 ist teilweise in der mittlere Polymerschicht 320 und teilweise in der unteren Polymerschicht 310 ausgebildet.

Figur 2 zeigt eine seitliche Ansicht des mikrohydraulischen Systems 100 gemäß dem ersten Ausführungsbeispiel von Figur 1A der vorliegenden Erfindung, bei dem die Gebermembran 20 mit einem Druck beaufschlagt wird. Das Geberelement wird somit pneumatisch betätigt, wobei in die ersten Halbkammer 25 des Geberelements komprimierte Luft eingeleitet wird. Dies sorgt für eine Verformung der Gebermembran 20 in der Art, dass diese auf Druck beansprucht wird und sich in Richtung zu der zweiten Halbkammer 26 des Geberelements hin verformt. Die Verformung der Gebermembran 20 in der zweiten Halbkammer 26 des Geberelements führt zu einer Verdrängung des Fluids 150 in der zweiten Halbkammer 26, welches in Richtung zu dem fluidischen Strömungskanal 70 bewegt wird, welcher mit der ersten Halbkammer 27 des Aktuatorelements fluidisch gekoppelt ist. Die erste Halbkammer 27 des Aktuatorelements nimmt die aus dem Geberelement verdrängte Menge des Fluids 150 auf und dabei wird die Aktuatormembran 40 in Richtung zu der zweiten Halbkammer 28 des Aktuatorelements hin verformt, wodurch das zweite Fluid 160 aus der zweiten Halbkammer 28 verdrängt wird. Auf diese Weise sorgt bei dem vorliegenden mikrohydraulischen System 100 eine Beaufschlagung des Geberelements mit einer Druckkraft zu einer Abgabe von einer Druckkraft bei dem Aktuatorelement.

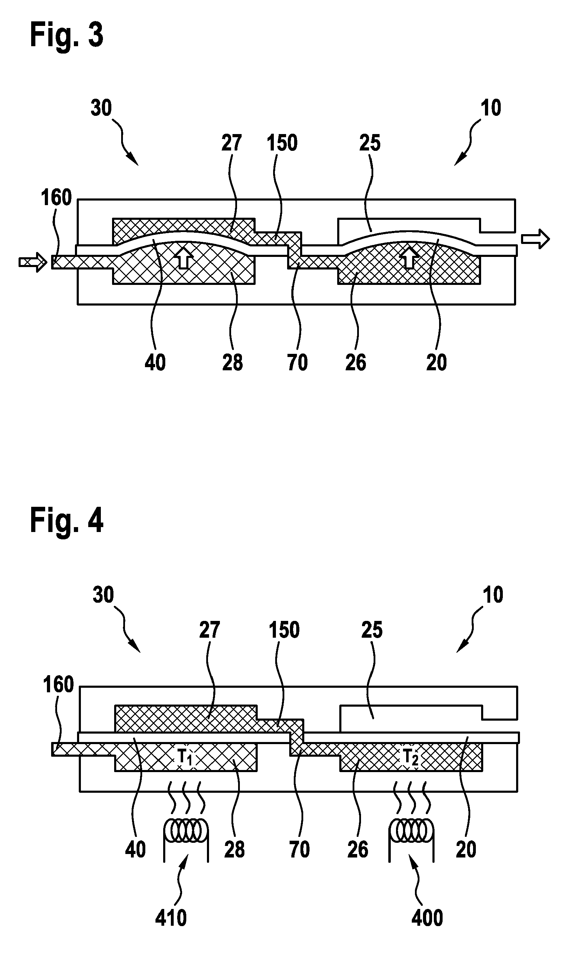

Figur 3 zeigt eine seitliche Ansicht des mikrohydraulischen Systems 100 gemäß dem ersten Ausführungsbeispiel von Figur 1A der vorliegenden Erfindung, bei dem die Gebermembran 20 mit einem Unterdruck beaufschlagt wird. Das Geberelement wird wiederum pneumatisch betätigt, wobei aus der ersten Halbkammer 25 des Geberelements Luft ausgeleitet wird. Dies sorgt für eine Verformung der Gebermembran 20 in der Art, dass diese auf Zug beansprucht wird und sich in Richtung zu der ersten Halbkammer 25 des Geberelements hin verformt. Die Verformung der Gebermembran 20 zu der ersten Halbkammer 25 des Geberelements sorgt für eine Ansaugung des Fluids 150 aus der ersten Halbkammer 27 des Aktuatorelements über den fluidischen Strömungskanal 70. Dabei wird die Aktuatormembran 40 in Richtung zu der ersten Halbkammer 27 des Aktuatorelements hin verformt, wodurch das zweite Fluid 160 in die zweite Halbkammer 28 eingesaugt wird. Auf diese Weise sorgt bei dem vorliegenden mikrohydraulischen System 100 eine Beaufschlagung des Geberelements mit einem Unterdruck zu einer ausgangsseitigen Zugkraft bei dem Aktuatorelement.

Figur 4 zeigt eine seitliche Ansicht des mikrohydraulischen Systems 100 gemäß dem ersten Ausführungsbeispiel von Figur 1A der vorliegenden Erfindung, bei dem eine thermische Harmonisierung zwischen den beiden voneinander getrennten Fluiden 150, 160 erfolgt. Um temperaturempfindliche Prozesse in der zweiten Halbkammer 28 des Aktuatorelements thermisch zu stabilisieren, kann das Fluid 150 auf dieselbe Temperatur gebracht werden wie das zweite Fluid 160 in der zweiten Halbkammer 28 des Aktuatorelements. Hierzu wird das Fluid 150 über ein erstes Heizelement 400 ausgehend von einer Temperatur T2 auf eine Temperatur T1 geführt, welche der Temperatur des zweiten Fluids 160 entspricht. Die Temperatur T2 hängt dabei primär von der Art und Zusammensetzung der zu prozessierenden Substanzen habt, befindet sich jedoch vorzugsweise in einem Bereich von 50 °C bis 95 °C. Die Temperatur T1 gleicht sich dabei entsprechend über die Zeit einer Temperatur aus dem vorgenannten Temperaturbereich an. Zusätzlich dazu kann das zweite Fluid 160 über ein zweites Heizelement 410 ebenfalls erwärmt oder ggf. abgekühlt werden. Auf dieses Weise entstehen trotz der ungenügenden thermischen Isolation der Aktuatormembran 40 keine thermischen Fluktuationen in der zweiten Halbkammer 28 des Aktuatorelements, wenn das Fluid 150 in das Aktuatorelement ein- oder ausgebracht wird.

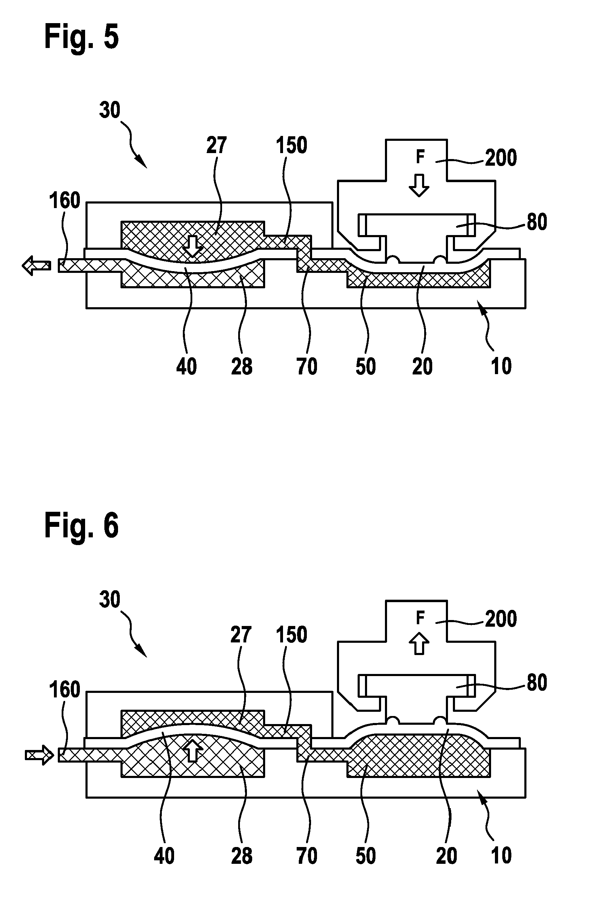

Figur 5 zeigt schematisch eine seitliche Ansicht eines mikrohydraulischen Systems 100 gemäß einem vierten Ausführungsbeispiel der vorliegenden Erfindung, bei dem eine Gebermembran 20 von einem Betätigungselement 80 auf Druck beansprucht wird und Figur 6 zeigt schematisch eine seitliche Ansicht des mikrohydraulischen Systems 100 gemäß Figur 5, bei dem die Gebermembran 20 von dem Betätigungselement 80 auf Zug beansprucht wird.

Das Geberelement 10 weist eine Geberkammer 50 auf, welche fluidisch mit einer ersten Halbkammer 27 eines Aktuatorelements 30 gekoppelt ist. Das Geberelement 10 weist eine Gebermembran 20 auf, welche auf der der Geberkammer 50 gegenüber liegenden Seite mit einem Betätigungselement 80 gekoppelt ist. Das Aktuatorelement 30 ist ausgangsseitig fluidisch mit einem zweiten Fluid 160 gekoppelt.

Das Betätigungselement 80 und die Gebermembran 20 sind miteinander verschweißt, so dass je nach der tatsächlichen Wirkrichtung des Betätigungselements 80 die Gebermembran 20 entweder auf Druck oder auf Zug beansprucht wird, und auf diese Weise ein Fluid 150, welches das Geberelement mit dem Aktuatorelement fluidisch koppelt, entsprechend beaufschlagt werden kann. Das Betätigungselement 80 ist wiederum formschlüssig mit einem Betätigungsmittel 200, insbesondere als eine Komponente eines mechanischen Antriebs, verbunden, welches auf diese Weise eine direkte mechanische Einwirkung des Analysegeräts (nicht dargestellt) auf die Gebermembran 20 erzeugt. Der mechanische Antrieb kann realisiert werden durch elektrische Antriebe (nicht dargestellt), wie zum Beispiel Elektromotoren (in Verbindung mit einer Gewindestange oder einem Exzenter, um die Drehbewegung des Elektromotors in eine Linearbewegung zu übersetzen), piezoelektrische Aktuatoren, elektrostatische Aktuatoren oder elektromagnetische Stellantriebe (beispielsweise Tauchspulenantriebe). Da sich bei diesen elektrischen Antrieben die zeitliche Entwicklung der mechanischen Kraft auf die Gebermembran 20 auf einfache Weise steuern lässt, ist es dadurch auch möglich, jedes Geberelement durch eine elektronische Steuerung mit einem individuellem Druck bzw. Zug und einer individuellen Druck- bzw. Zugverlaufskurve zu betreiben. Durch eine entsprechende Programmierung der Analysegeräts lässt sich das Stellverhalten frei an die Erfordernisse der Analyseapplikation anpassen, die auf einer bestimmten Kartusche (nicht dargestellt) implementiert ist.

Obwohl die Betätigung des Geberelements bei dem vierten Ausführungsbeispiel der vorliegenden Erfindung anders als bei dem ersten Ausführungsbeispiel der vorliegenden Erfindung erfolgt, ist die Wirkung des Geberelements und des Aktuatorelements analog dazu. Somit wird auf die entsprechenden Ausführungen von Figur 3 und 4 verwiesen, welche in sinnfälliger Art und Weise den vorliegenden Elementen des vierten Ausführungsbeispiels der vorliegenden Erfindung anzupassen sind.

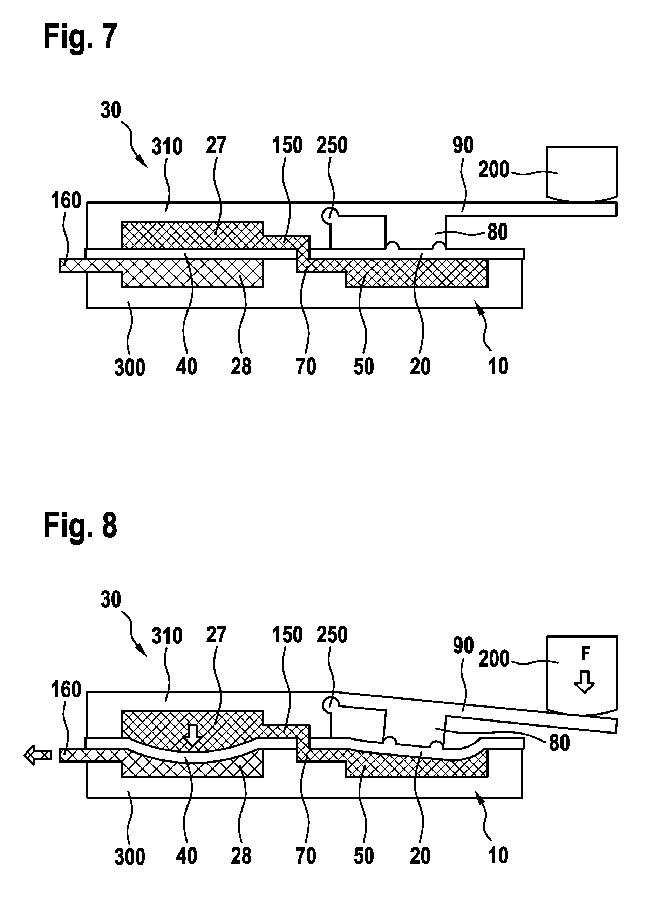

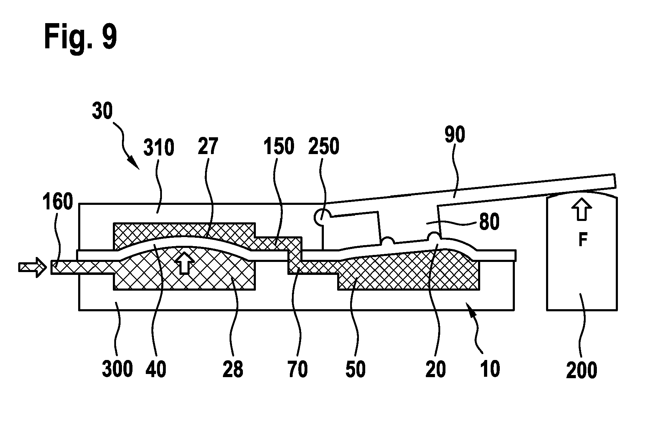

Figur 7 zeigt schematisch eine seitliche Ansicht eines mikrohydraulischen Systems 100 gemäß einem fünften Ausführungsbeispiel der vorliegenden Erfindung, bei dem eine Gebermembran 20 mit einem Betätigungsmittel 200 über ein Betätigungselement 80 mit einem Hebelabschnitt 90 gekoppelt ist, in einer Ausgangsstellung. Figur 8 zeigt schematisch eine seitliche Ansicht des mikrohydraulischen Systems 100 gemäß Figur 7, bei dem die Gebermembran 20 von dem Betätigungselement 80 auf Druck beansprucht wird; und Figur 9 zeigt schematisch eine seitliche Ansicht des mikrohydraulischen Systems 100 gemäß Figur 7, bei dem die Gebermembran 20 von dem Betätigungselement 80 auf Zug beansprucht wird.

Das mikrohydraulische System 100 weist ein erstes hydraulisch wirkendes Element 10 als ein Geberelement mit einer Gebermembran 20, ein zweites hydraulisch wirkendes Element 30 als ein Aktuatorelement mit einer Aktuatormembran 40 auf, wobei das Geberelement mit dem Aktuatorelement über ein Fluid 150 fluidisch gekoppelt ist, und eine Betätigung des Geberelements eine Betätigung des Aktuatorelements realisiert. Sowohl die Gebermembran 20 als auch die Aktuatormembran 40 befinden sich gemäß Figur 7 in einer neutralen Ausgangsstellung, das heißt sie sind weder elastisch noch plastisch verformt. In der zweiten Halbkammer 28 der Aktuatorkammer 60 ist ein zweites Fluid 160 vorhanden, welches die Betätigung des Aktuatorelements in Richtung zu einer Ausgangsseite des mikrohydraulischen Systems 100 überträgt, wodurch wiederum weitere hydraulisch wirkende Elemente (nicht dargestellt) betätigt werden können.

Das mikrohydraulische System 100 ist ebenfalls vorzugsweise in ein (planares) Mikrofluidiklabor (nicht dargestellt) integriert, welches bevorzugt einen Schichtaufbau im Rahmen eines Schichtsystems aufweist, insbesondere als ein Polymerschichtsystem. Das mikrohydraulische System 100 ist in einer oberen Polymerschicht 300 und einer unteren Polymerschicht 310 ausgebildet.

Das Geberelement weist ist auf der der Geberkammer 50 gegenüber liegenden Seite mit einem Betätigungselement 80 gekoppelt. Das Betätigungselement 80 und die Gebermembran 20 sind miteinander verschweißt, so dass je nach der tatsächlichen Wirkrichtung des Betätigungselements 80 die Gebermembran 20 entweder auf Druck oder auf Zug beansprucht wird, und auf diese Weise das Fluid 150 entsprechend beaufschlagt werden kann. Das Betätigungselement 80 weist einen Hebelabschnitt 90 auf, welcher sich über eine vorbestimmte Länge in seitlicher Richtung von der Geberkammer 50 weg erstreckt. In Abhängigkeit von der gewählten Länge des Hebelabschnitts 90 lässt sich eine von einem Betätigungsmittel 200 in das Betätigungselement 80 eingeleitete Kraft innerhalb des mikrohydraulischen Systems 100 vervielfachen.

Das Betätigungselement 80 ist über den Hebelabschnitt 90 mit dem Betätigungsmittel 200, insbesondere als eine Komponente eines mechanischen Antriebs, verbunden, welches auf diese Weise eine direkte mechanische Einwirkung des Analysegeräts (nicht dargestellt) auf die Gebermembran 20 erzeugt. Der mechanische Antrieb kann wiederum realisiert werden durch elektrische Antriebe, wie sie vorstehend mit Bezugnahme auf Figur 5 und 6 bereits beschrieben wurden. Das Betätigungselement 80 ist auf der dem Hebelabschnitt 90 gegenüber liegenden Seite mit einem Gelenkelement 250 verbunden, welches teilweise in der oberen Polymerschicht 300 ausgebildet ist. Das Gelenkelement 250 dient dabei im Betrieb des mikrohydraulischen Systems 100 bevorzugt zur Führung des Betätigungselements 80.

Bezugnehmend auf Figur 8 und 9 sorgt bei dem vorliegenden mikrohydraulischen System 100 in analoger Weise zu den vorstehend beschriebenen Ausführungsbeispielen eine Betätigung des Geberelements für eine Betätigung des Aktuatorelements, und genauer eine Beaufschlagung des Geberelements mit einer Zug- bzw. Druckkraft zu einer (ausgangsseitigen) Zug- bzw. Druckkraft bei dem Aktuatorelement.

Obwohl die Erfindung vorliegend anhand bevorzugter Ausführungsbeispiele beschrieben wurde, ist sie darauf keineswegs beschränkt, sondern auf vielfältige Weise modifizierbar. Insbesondere wird darauf hingewiesen, dass "ein" vorliegend keine Vielzahl ausschließt.

## Patentansprüche

1. Mikrohydraulisches System (100), insbesondere zum Einsatz in planaren Mikrofluidiklaboren, aufweisend
- ein erstes hydraulisch wirkendes Element (10) als ein Geberelement mit einer Gebermembran (20),
- ein zweites hydraulisch wirkendes Element (30) als ein Aktuatorelement mit einer Aktuatormembran (40),
wobei die Gebermembran (20) mit der Aktuatormembran (40) derart fluidisch gekoppelt ist, dass eine Auslenkung der Gebermembran (20) eine Auslenkung der Aktuatormembran (40) bewirkt sowie eine Betätigung der Gebermembran (20) sowohl mittels einer Druckkraft als auch mittels einer Zugkraft vorgesehen ist, und somit die Gebermembran (20) in Abhängigkeit von ihrer Auslenkung eine Druck- oder Zugkraft auf die Aktuatormembran (40) ausübt.

2. Mikrohydraulisches System nach Anspruch 1, **dadurch gekennzeichnet, dass** das Geberelement eine Geberkammer (50) aufweist, und dass das Aktuatorelement eine Aktuatorkammer (60) aufweist, welche von der Geberkammer (50) verschieden ist, und die Geberkammer (50) mit der Aktuatorkammer (60) mittels eines fluidischen Strömungskanals (70) gekoppelt ist.

3. Mikrohydraulisches System nach Anspruch 2, **dadurch gekennzeichnet, dass** die Gebermembran (20) und die Aktuatormembran (40) im Wesentlichen in einer Ebene angeordnet sind, wobei eine mit dem Fluid (150) gefüllte Halbkammer (26) der Geberkammer (50) in Bezug auf die Gebermembran (20) auf einer gegenüber liegenden Seite von einer mit dem Fluid (150) gefüllten Halbkammer (27) der Aktuatorkammer (60) angeordnet ist.

4. Mikrohydraulisches System nach Anspruch 2, **dadurch gekennzeichnet, dass** die Gebermembran (20) und die Aktuatormembran (40) im Wesentlichen in einer Ebene angeordnet sind, wobei eine mit dem Fluid (150) gefüllte Halbkammer (26) der Geberkammer (50) und eine mit dem Fluid (150) gefüllte Halbkammer (27) der Aktuatorkammer (60) in Bezug auf die Gebermembran (20) auf derselben Seite angeordnet sind.

5. Mikrohydraulisches System nach Anspruch 2, **dadurch gekennzeichnet, dass** die Gebermembran (20) und die Aktuatormembran (40) jeweils in unterschiedlichen Ebenen angeordnet sind.

6. Mikrohydraulisches System nach Anspruch 1, **dadurch gekennzeichnet, dass** eines von dem Geberelement oder dem Aktuatorelement eine Geberkammer (50) oder eine Aktuatorkammer (60) aufweist, wobei die Gebermembran (20) oder die Aktuatormembran (40) jeweils direkt mittels eines fluidischen Strömungskanals (70) mit der Aktuatorkammer (60) oder mit der Geberkammer (50) gekoppelt ist.

7. Mikrohydraulisches System nach einem der vorhergehenden Ansprüche, **dadurch gekennzeichnet, dass** die Gebermembran (20) mit einem Betätigungselement (80) gekoppelt ist.

8. Mikrohydraulisches System nach Anspruch 7, **dadurch gekennzeichnet, dass** das Betätigungselement (80) derart mit der Gebermembran (20) gekoppelt ist, dass das Betätigungselement (80) in Abhängigkeit von dessen Wirkrichtung eine Druck- oder Zugkraft auf die Gebermembran (20) ausübt.

9. Mikrohydraulisches System nach Anspruch 7 oder 8, **dadurch gekennzeichnet, dass** das Betätigungselement (80) magnetisch mit der Gebermembran (20) gekoppelt ist.

10. Mikrohydraulisches System nach einem der vorhergehenden Ansprüche, **dadurch gekennzeichnet, dass** das Betätigungselement (80) einen Hebelabschnitt (90) aufweist, welcher für die Betätigung des Geberelements mit einem Betätigungsmittel (200) zusammenwirkt.

11. Mikrohydraulisches System nach einem der vorhergehenden Ansprüche, **dadurch gekennzeichnet, dass** zumindest eine von der Gebermembran (20) und der Aktuatormembran (40) impermeabel für das Fluid (150) ist.

12. Mikrohydraulisches System nach einem der vorhergehenden Ansprüche, **dadurch gekennzeichnet, dass** der Gefrierpunkt und der Siedepunkt des Fluids (150) so gewählt sind, dass das Fluid (150) über den gesamten Temperaturbereich, welcher an der Aktuatormembran (40) im Betrieb auftritt, jeweils flüssig ist.

13. Mikrohydraulisches System nach einem der vorhergehenden Ansprüche, **dadurch gekennzeichnet, dass** die Temperatur des Fluids (150) im Betrieb im Wesentlichen identisch mit einer Temperatur eines zweiten Fluids (160) ist, welches ausgangsseitig von dem Aktuatorelement mit der Aktuatormembran (40) gekoppelt ist.

14. Mikrohydraulisches System nach Anspruch 2 oder 6, **dadurch gekennzeichnet, dass** der Strömungswiderstand in dem fluidischen Strömungskanal (70) mittels der Länge und/oder des Durchmessers des fluidischen Strömungskanals (70) variierbar ist.
